# EUROPÄISCHE PATENTSCHRIFT

(11) **EP 2 883 022 B1**
(45) Veröffentlichungstag und Bekanntmachung des Hinweises auf die Patenterteilung: **24.08.2016**
(21) Anmeldenummer: 13765306.9
(22) Anmeldetag: 10.09.2013
(51) Int. Cl.: B61L 23/04, B61L 25/02, B61L 3/06, B61L 23/00, G01H 9/00

(54) **VERFAHREN ZUM BETREIBEN EINES SCHIENENFAHRZEUGS IN EINEM EISENBAHNSYSTEM UND EISENBAHNSYSTEM**
METHOD FOR OPERATING A RAIL VEHICLE IN A RAILWAY SYSTEM AND RAILWAY SYSTEM
PROCÉDÉ POUR FAIRE FONCTIONNER UN VÉHICULE FERROVIAIRE DANS UN SYSTÈME FERROVIAIRE ET SYSTÈME FERROVIAIRE

(30) Priorität: 27.09.2012 DE 102012217627
(43) Veröffentlichungstag der Anmeldung: 17.06.2015
(73) Patentinhaber: Siemens Aktiengesellschaft, 80333 München (DE)
(72) Erfinder: ARPACI, Gamze, 38108 Braunschweig (DE); BACHMANN, Wolfgang, 38110 Braunschweig (DE); MARTITZ, Doris, 38527 Meine (DE); RAHN, Karsten, 38162 Cremlingen (DE)
(86) Internationale Anmeldenummer: PCT/EP2013/068676
(87) Internationale Veröffentlichungsnummer: WO 2014/048718

(56) Entgegenhaltungen:
- WO-A1-2011/027166
- US-A- 5 330 136
- US-A1- 2003 010 872

## Beschreibung

Verfahren zum Betreiben eines Schienenfahrzeugs in einem Eisenbahnsystem und Eisenbahnsystem
Die Erfindung betrifft ein Verfahren zum Betreiben eines Schienenfahrzeugs in einem Eisenbahnsystem mit mindestens einem neben mindestens einer Schienenstrecke verlegten Lichtwellenleiter, in den unter seiner Ausnutzung als verteilter akustischer Sensor Lichtimpulse eingespeist und rückgestreutes Licht detektiert wird.

Ein Verfahren dieser Art ist in der internationalen Patentanmeldung WO 2011/027166 A1 beschrieben. Mit diesem bekannten Verfahren ist es möglich, ein Schienenfahrzeug zu identifizieren und auch von anderen Schienenfahrzeugen zu unterscheiden. Dabei wird ausgenutzt, dass jedes Schienenfahrzeug bei seiner Bewegung ein Fahrgeräusch erzeugt, das hinsichtlich seines Frequenzspektrums spezifisch für das jeweilige Schienenfahrzeug ist.

Das Dokument US 5 330 136 zeigt ein Verfahren und einen Gegenstand nach den Oberbegriffen der unabhängigen Ansprüche.

Der Erfindung liegt die Aufgabe zugrunde, ein Verfahren zum Betreiben eines Schienenfahrzeugs in einem Eisenbahnsystem anzugeben, das auf relativ einfache Weise hohen Sicherheitsanforderungen gerecht wird.

Zur Lösung dieser Aufgabe wird bei einem Verfahren der eingangs angegebenen Art erfindungsgemäß ein Schienenfahrzeug mit einem hinsichtlich seines Frequenzspektrums notfallbezeichnend einstellbaren Schallerzeuger verwendet und beim Aktivieren des Schallerzeugers wird ein Notfall-Signal des Schienenfahrzeugs gewonnen, wenn im rückgestreuten Licht ein Frequenzspektrum detektiert wird, das dem eingestellten Notfall-Frequenzspektrum entspricht.

Ein wesentlicher Vorteil des erfindungsgemäßen Verfahrens besteht darin, dass es bei einem häufig anzutreffenden Eisenbahnsystem mit parallel zur Schienenstrecke verlegtem Lichtleiter auf einfache Weise die Möglichkeit bietet, ein Notfallsignal an eine Streckenzentrale zu übermitteln. Es bedarf dazu lediglich der Verwendung eines notfallbezeichnend einstellbaren Schallerzeugers am Schienenfahrzeug, vorteilhafterweise einer Hupe, und eines Vergleichs des detektierten Frequenzspektrums des rückgestreuten Lichts mit einem vorgegebenen Notfall-Referenzfrequenzspektrum, um bei einer Übereinstimmung der Frequenzspektren unter Benutzung der vorhandenen Kommunikationseinrichtungen zur Streckenzentrale ein Notfall-Signal zu übertragen. Ein weiterer Vorteil besteht darin, dass ein Notfall-Signal stets in der jeweiligen augenblicklichen Position des Schienenfahrzeugs auf der Schienenstrecke erzeugt werden und auch übermittelt werden kann, weil zum Erzeugen eines Notfall-Signals Notrufsäulen und Festnetz-Telefone sowie auch mobile Telefone nicht benötigt werden, die bei nicht vorhandener Netzabdeckung keine Nachrichtenübermittlung ermöglichen.

Bei einer vorteilhaften Ausführungsform des erfindungsgemäßen Verfahrens wird eine eingangsseitig mit den eingespeisten Lichtimpulsen und dem rückgestreuten Licht beaufschlagte Auswerteeinrichtung verwendet, die ein den Ort des Aktivieren des Schallerzeugers angebendes Ortungssignal erzeugt. Eine solche Auswerteeinrichtung wird beispielsweise von der Firma OptaSense angeboten. Wird das Ortungssignal mit berücksichtigt, dann ist mit dem Notfall-Signal auch der Ort des Notfalls signalisierbar.

Bei dem erfindungsgemäßen Verfahren ist es auch vorteilhaft, wenn das Notfall-Signal zu einer Streckenzentrale übertragen wird und dort Notfall-Reaktionen auslöst

Die Erfindung betrifft ferner ein Eisenbahnsystem mit mindestens einem neben mindestens einer Schienenstrecke verlegten Lichtwellenleiter als verteilter akustischer Sensor, dem ein Lichtsender und ein Lichtempfänger für rückgestreutes Licht zugeordnet sind.

Um ein solches Eisenbahnsystem so auszugestalten, dass es in relativ einfacher Weise hohen Sicherheitsanforderungen entspricht, enthält das Eisenbahnsystem ein Schienenfahrzeug mit einem hinsichtlich seines Frequenzspektrums notfallbezeichnend einstellbaren Schallerzeuger, und dem Lichtempfänger ist eine elektrische Vergleichseinrichtung nachgeordnet, die das aus dem rückgestreuten Licht von dem Lichtempfänger detektierte Frequenzspektrum mit dem eingestellten Notfall-Frequenzspektrum vergleicht und bei Übereinstimmung ein Notfall-Signal des Schienenfahrzeugs bildet.

Mit dem erfindungsgemäßen Eisenbahnsystem lassen sich sinngemäß die gleichen Vorteile erzielen, wie sie oben im Zusammenhang mit dem erfindungsgemäßen Verfahren angegeben worden sind.

Bei dem erfindungsgemäßen Eisenbahnsystem ist der Schallerzeuger vorzugsweise eine Hupe.

Als vorteilhaft wird es auch erachtet, wenn bei dem erfindungsgemäßen Eisenbahnsystem an den Lichtsender und an den Lichtempfänger eine Ortungseinrichtung angeschlossen ist, die ein den Ort des Aktivierens des Schallerzeugers angebendes Ortungssignal erzeugt. Dieses Ortungssignal bildet mit dem Ausgangssignal der Vergleichseinrichtung ein Notfall-Signal, dass nicht nur den Notfall für sich angibt, sondern auch den Ort des Notfalls.

Die Vergleichseinrichtung des erfindungsgemäßen Eisenbahnsystems ist vorteilhafterweise mit einer Streckenzentrale kommunikativ verbunden, weil von dort am Ehesten entsprechende Notfall-Maßnahmen eingeleitet bzw. ergriffen werden können.

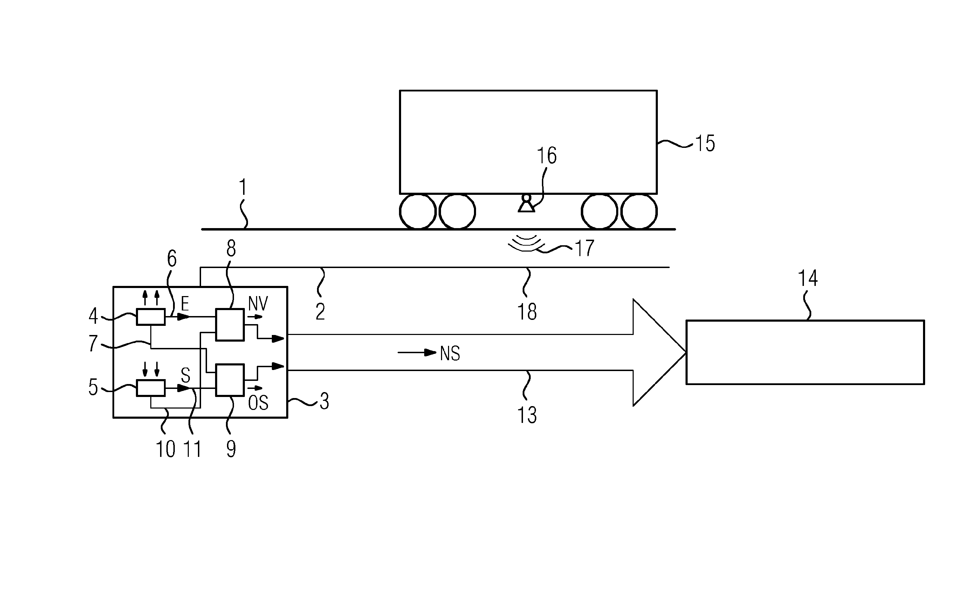

Zur weiteren Erläuterung der Erfindung ist in der Figur ein Ausführungsbeispiel eines erfindungsgemäßen Eisenbahnsystems dargestellt.

Die Figur zeigt einen Streckenabschnitt 1 eines weiter nicht dargestellten Streckennetzes eines Eisenbahnsystems, zu dem parallel ein Lichtwellenleiter 2 verlegt ist. An den Lichtwellenleiter 2 ist eine Lichtsende- und Auswerteeinrichtung 3 angeschlossen, die einen Lichtsender 4 und einen Lichtempfänger 5 enthält. Der Lichtsender 4 ist über Leitungen 6 und 7 sowohl mit einer Vergleichseinrichtung 8 als auch mit einer Ortungseinrichtung 9 verbunden. Entsprechend ist der Lichtempfänger 5 ausgangsseitig über weitere Leitungen 10 und 11 an die Vergleichseinrichtung 8 und die Ortungseinrichtung 9 angeschlossen. Die Lichtsende- und Auswerteeinrichtung 3 ist über eine Busverbindung 13 mit einer Streckenzentrale 14 verbunden ist.

Auf der Schienenstrecke 1 befindet sich in dem dargestellten Ausführungsbeispiel ein Schienenfahrzeug 15, das mit einem Schallerzeuger 16 in Form einer Hupe versehen ist.

Wird in einem Notfall vom Führer des Schienenfahrzeugs 15 der Schallerzeuger 16 betätigt, dann wird von diesem ein Schallsignal 17 mit einem notfallbezeichnenden Frequenzspektrum ausgesandt. Durch dieses Schallsignal 17 wird der Lichtwellenleiter 2 dahingehend beeinflusst, dass er im Bereich 18 des auftreffenden Schallsignals 17 eine Rückstreuung des von dem Lichtsender 4 abgegebenen Lichts verursacht. Das rückgestreute Licht wird in dem Lichtempfänger 5 detektiert, und es wird ein Signal S mit einem Frequenzspektrum erzeugt, das dem Frequenzspektrum des Schallsignals 17 entspricht. In der Vergleichseinrichtung 6 wird das Signal S mit einem elektrischen Signal E verglichen, dessen Frequenzspektrum bei einem Notfall dem eingestellten Notfall-Frequenzspektrum des Lichtsenders 4 entspricht. Bei Übereinstimmung des Signals S hinsichtlich seines Frequenzspektrums mit dem Notfall-Frequenzspektrum wird ein Notfall-Vorsignal NV erzeugt.

Außerdem wird in der Ortungseinrichtung 9 ein Ortungssignal OS gebildet, das eine Information über die Position des Schienenfahrzeugs beim Aktivieren des Schallerzeugers 16 enthält. Das Notfall-Vorsignal NV wird zusammen mit dem Ortungssignal OS unter Bildung eines Notfall-Signals NS über den Bus 13 zur Streckenzentrale 14 übertragen und dort als eine Notfall-Meldung erfasst. Von der Streckenzentrale können daraus entsprechende Reaktionen abgeleitet werden.

## Patentansprüche

1. Verfahren zum Betreiben eines Schienenfahrzeugs (15) in einem Eisenbahnsystem mit mindestens einem neben mindestens einer Schienenstrecke (1) verlegten Lichtwellenleiter (2), in den unter seiner Ausnutzung als verteilter akustischer Sensor Lichtimpulse eingespeist und rückgestreutes Licht detektiert wird,
**dadurch gekennzeichnet, dass**
• ein Schienenfahrzeug (15) mit einem hinsichtlich seines Frequenzspektrums notfallbezeichnend einstellbaren Schallerzeuger (16)verwendet wird und
• beim Aktivieren des Schallerzeugers (16) ein Notfall-Signal (NS) des Schienenfahrzeugs (15) gewonnen wird, wenn im rückgestreuten Licht ein Frequenzspektrum detektiert wird, das dem eingestellten Notfall-Frequenzspektrum des Schallerzeugers (16) entspricht.

2. Verfahren nach Anspruch 1,
**dadurch gekennzeichnet, dass**
• als Schallerzeuger (16) eine Hupe verwendet wird.

3. Verfahren nach Anspruch 1 oder 2,
**dadurch gekennzeichnet**, das
• eine eingangsseitig mit den eingespeisten Lichtimpulsen und dem rückgestreuten Licht beaufschlagte Lichtsende- und Auswerteeinrichtung (3) in einer derartigen Ausführung verwendet wird, dass der Ort des Aktivierens des Schallerzeugers (16) ermittelbar ist.

4. Verfahren nach einem der vorangehenden Ansprüche,
**dadurch gekennzeichnet, dass**
• das Notfall-Signal zu einer Streckenzentrale übertragen wird und dort Notfall-Reaktionen auslöst.

5. Eisenbahnsystem mit mindestens einem neben mindestens einer Schienenstrecke (1) verlegten Lichtwellenleiter (2) als verteilter akustischer Sensor, dem ein Lichtsender (4) und ein Lichtempfänger (5) für rückgestreutes Licht zugeordnet sind,
**dadurch gekennzeichnet, dass**
• das Eisenbahnsystem ein Schienenfahrzeug mit einem hinsichtlich seines Frequenzspektrums notfallbezeichnend einstellbaren Schallerzeuger (16) enthält, und
• dem Lichtempfänger (4) eine elektrische Vergleichseinrichtung (8) nachgeordnet ist, die das aus dem rückgestreuten Licht von dem Lichtempfänger (5) detektierte Frequenzspektrum mit dem eingestellten Notfall-Frequenzspektrum des Schallerzeugers (16) vergleicht und bei Übereinstimmung ein Notfall-Signal (NS) des Schienenfahrzeugs (15) bildet.

6. Eisenbahnsystem nach Anspruch 5,
**dadurch gekennzeichnet, dass**
• an den Lichtsender (4) und an den Lichtempfänger (5) eine Ortungseinrichtung (9) angeschlossen ist, die ein den Ort des Aktivierens des Schallerzeugers (16) angebendes Ortungssignal (OS) erzeugt.

7. Eisenbahnsystem nach Anspruch 5 oder 6,
**dadurch gekennzeichnet, dass**
• der Schallerzeuger (16) eine Hupe ist.

8. Eisenbahnsystem nach einem der Ansprüche 5 bis 7, **dadurch gekennzeichnet, dass**
• die Lichtsende- und Auswerteeinrichtung (3) mit einer Streckenzentrale (14) kommunikativ verbunden ist.

## Claims

1. Method for operating a rail vehicle (15) in a railway system having at least one optical waveguide (2) laid next to at least one railway track (1) into which light pulses are fed, with said optical waveguide being used as a distributed acoustic sensor and backscattered light being detected,
**characterised in that**
• a rail vehicle (15) is used having a sound generator (16) which can be adjusted in terms of its frequency spectrum in such a way that it indicates an emergency and
• when the sound generator (16) is activated an emergency signal (NS) of the rail vehicle (15) is acquired if a frequency spectrum which corresponds to the adjusted emergency frequency spectrum of the sound generator (16) is detected in the backscattered light.

2. Method according to claim 1,
**characterised in that**
• a horn is used as the sound generator (16).

3. Method according to claim 1 or 2,
**characterised in that**
• a light-transmitting and evaluating device (3) that is exposed on the input side to the light pulses fed-in and the backscattered light is used in one embodiment of this kind such that the location of the activation of the sound generator (16) can be determined.

4. Method according to one of the preceding claims,
**characterised in that**
• the emergency signal is transmitted to a track control centre where emergency reactions are triggered.

5. Railway system having at least one optical waveguide (2) laid next to at least one railway track (1) as a distributed acoustic sensor to which a light transmitter (4) and a light receiver (5) for backscattered light are assigned,
**characterised in that**
• the railway system comprises a rail vehicle with a sound generator (16) which can be adjusted in terms of its frequency spectrum in such a way that it indicates an emergency and
• downstream of the light receiver (4), there is an electrical comparator device (8), which compares the frequency spectrum detected from the backscattered light by the light receiver (5) with the adjusted emergency frequency spectrum of the sound generator (16) and, in the event of conformity, forms an emergency signal (NS) of the rail vehicle (15).

6. Railway system according to claim 5,
**characterised in that**
• a locator device (9), which generates a locator signal (OS) indicating the location of the activation of the sound generator (16) is connected to the light transmitter (4) and the light receiver (5).

7. Railway system according to claim 5 or 6,
**characterised in that**
• the sound generator (16) is a horn.

8. Railway system according to one of claims 5 to 7,
**characterised in that**
• the light-transmitting and evaluating device (3) is communicatively connected to a track control centre (14).

## Revendications

1. Procédé pour faire fonctionner un véhicule (15) ferroviaire dans un système de voie ferrée, comprenant au moins un guide d'ondes (2) lumineux, qui est posé à côté d'au moins une section (1) de voie et dans lequel, en l'utilisant comme sonde acoustique répartie, des impulsions de lumière sont injectées et de la lumière rétrodiffusée est détectée,
**caractérisé en ce que**
• on utilise un véhicule (15) ferroviaire ayant un producteur (16) de sons réglable, s'identifiant en cas d'urgence à son spectre de fréquence et
• lorsque le producteur (16) de sons est activé, on obtient un signal (NS) d'urgence du véhicule (15) ferroviaire, s'il est détecté dans la lumière rétrodiffusée un spectre de fréquence, qui correspond au spectre de fréquence en cas d'urgence réglé du producteur (16) de sons.

2. Procédé suivant la revendication 1,
**caractérisé en ce que**
• on utilise comme producteur (16) de sons un klaxon.

3. Procédé suivant la revendication 1 ou 2,
**caractérisé en ce que**
• on utilise un dispositif (3) d'émission de lumière et d'exploitation, alimenté du côté de l'entrée par les impulsions de lumière injectées et par la lumière rétrodiffusée, dans un mode de réalisation tel que l'on peut déterminer l'emplacement de l'activation du producteur (16) de sons.

4. Procédé suivant l'une des revendications précédentes, **caractérisé en ce que**
• le signal d'urgence est transmis à une centrale de voie et y déclenche des réactions d'urgence.

5. Système de voie ferrée, comprenant au moins un guide d'ondes (2) lumineux posé à côté d'au moins une section (1) de voie comme sonde acoustique répartie, auquel sont associés un émetteur (4) de lumière et un récepteur (5) de lumière pour de la lumière rétrodiffusée,
**caractérisé en ce que**
• le système de chemin de fer comporte un véhicule ferroviaire ayant un producteur (16) de sons réglable s'identifiant en cas d'urgence par son spectre de fréquence et
• en aval du récepteur (4) de lumière est monté un dispositif (8) électrique de comparaison, qui compare le spectre de fréquence détecté à partir de la lumière rétrodiffusée par le récepteur (5) de lumière au spectre de fréquence d'urgence réglé du producteur (16) de sons et qui, s'il y a coïncidence, forme un signal (NS) d'urgence du véhicule (15) ferroviaire.

6. Système de voie ferrée suivant la revendication 5,
**caractérisé en ce que**
• à l'émetteur (4) de lumière et au récepteur (5) de lumière est raccordé un dispositif (9) de localisation, qui produit un signal (OS) de localisation indiquant l'emplacement de l'activation du producteur (16) de sons.

7. Système de voie ferrée suivant la revendication 5 ou 6,
**caractérisé en ce que**
• le producteur (16) de sons est un klaxon.

8. Système de voie ferrée suivant l'une des revendications 5 à 7,
**caractérisé en ce que**
• le dispositif (3) d'émission de lumière et d'exploitation est relié en communication avec une centrale (14) de voie.
